# FASCICULE DE BREVET EUROPEEN

(11) **EP 2 102 726 B1**
(45) Date de publication et mention de la délivrance du brevet: **30.08.2017**
(21) Numéro de dépôt: 07823325.1
(22) Date de dépôt: 23.07.2007
(51) Int. Cl.: G05B 19/4093, G06F 17/50

(54) **PROCEDE DE CONFIGURATION, DE ROUES HELICES CREUSES ET DE LEURS CAGES**
VERFAHREN ZUR KONFIGURATION VON HOHLEN LAUFRÄDERN UND IHREN KÄFIGEN
METHOD OF CONFIGURING HOLLOW HELICAL WHEELS AND THEIR CAGES

(30) Priorité: 24.07.2006 FR 0606764
(43) Date de publication de la demande: 23.09.2009
(73) Titulaire: Carrouset, Pierre, 75015 Paris (FR)
(72) Inventeur: Carrouset, Pierre, 75015 Paris (FR)
(74) Mandataire: Dennemeyer & Associates S.A.
(86) Numéro de dépôt international: PCT/FR2007/001267
(87) Numéro de publication internationale: WO 2008/012425

(56) Documents cités:
- US-B1- 6 393 331
- GRASEL JURGEN ET AL: "A full parametric model for turbomachinery blade design and optimisation" PROCEEDINGS OF DETC. ASME. DESIGN ENGINEERING TECHNICAL CONFERENCES AND COMPUTERS AND INFORMATION IN ENGINEERING CONFERENCE, XX, XX, vol. 1, 28 septembre 2004 (2004-09-28), pages 907-914, XP001247600
- KOINI G N ET AL: "Parametric Design of Turbomachinery Blades" COMPUTER AS A TOOL, 2005. EUROCON 2005.THE INTERNATIONAL CONFERENCE ON BELGRADE, SERBIA AND MONTENEGRO 21-24 NOV. 2005, PISCATAWAY, NJ, USA,IEEE, 21 novembre 2005 (2005-11-21), pages 539-542, XP010916147 ISBN: 1-4244-0049-X
- SRIPHUNG C ET AL: "Modelling and Simulation of a Fluid-driven Microturbine" ELECTRONICS MATERIALS AND PACKAGING, 2005. EMAP 2005. INTERNATIONAL SYMPOSIUM ON TOKYO, JAPAN 11-14 DEC. 2005, PISCATAWAY, NJ, USA,IEEE, 11 décembre 2005 (2005-12-11), pages 247-251, XP010896464 ISBN: 1-4244-0107-0

## Description

### Domaine technique concerné.

Les roues creuses et leurs cages creuses sont des dispositifs qui permettent, des transferts de fluide, d'en exploiter l'énergie qu'ils contiennent, ou encore d'employer les forces qu'ils exercent.

### PROBLEME POSE :

Le développement des roues creuses et leurs cages statiques a été freiné du fait de leurs formes très complexes, qui doivent être conçues et adaptées pour chaque application concernée, et jusqu'à maintenant il n'était pas possible d'en concevoir en quantité facilement pour pouvoir les tester et les optimiser. Un tel état de la technique est décrit dans le document :GRÄSEL JÜRGEN ET AL: "A full parametric model for turbomachinery blade design and optimisation" PROCEEDINGS OF DETC'04 ASME 2004 DESIGN ENGINEERING TECHNICAL CONFERENCES AND COMPUTERS AND INFORMATION IN ENGINEERING CONFERENCE, vol. 1, 28 septembre - 2 October 2004 (2004-09-28 - 2004-10-02), pages 907-914.

### LES MOYENS.

La conception fabrication assistée par ordinateur (CFAO), offres-de nouvelles possibilités, et cet outil est ici utilisé pour amplifie les idées novatrices qui vont permettre de faire progresser la connaissance des roues creusés et de leurs cages statiques.

Cette invention est l'outil qui permet de créer et de concevoir très rapidement des roues creuses et leurs cages statiques, en changeant très facilement toutes leurs données spécifiques, de façon à aider l'acquisition de la connaissance de ces nouveaux produits pour les nombreuses applications concernées.

### TERMINOLOGIE

Les formes évolutives complexes des multiples « éléments constitutifs » de la structure des roues creuses et des cages statiques, sont aussi appelées : aubes, pales, cloisons, écopes, lames , grilles, ventelles, entretoises... et sont tous regroupées ici sous l'appellation « éléments constitutifs »

Ce procédé de configuration des roues creuses (1) et de leurs cages statiques (2), comporte les étapes de CFAO suivantes (Conception Fabrication Assistée par Ordinateur)
1° ---- Il faut d'abord entrer les paramètres de configuration fondamentaux offerts en option :
   -- les éléments mécaniques conventionnels tel que les arbres, les tétons, les bagues, les paliers, les supports, permettant d'incorporer les roues et cages dans leur milieu applicatif
   -- les valeurs dimensionnelles telles que longueur hors tout, diamètres intérieurs et extérieurs
   -- la quantité de chaque élément constitutifs
   -- il faut aussi déterminer les sens de rotation choisis.
2° ---- Il faut ensuite entrer les paramètres mathématiques correspondant aux formes géométriques connues qui vont déterminer les surfaces de révolution extérieures et intérieures balayées par les roues, ou celles des cages qui contiennent les roues, et les formes extérieures des cages. Elles sont de préférence de forme, ronde, cylindrique, conique, ogivale, elliptique, etc, forme seule ou associées,
3° ---- Suivent la détermination des pas évolutifs des éléments constitutifs hélicoïdes qui sont définis soit par les formules mathématiques conventionnelles, soit de préférence par l'indication d'au moins deux valeurs données sur des points précisés placés sur la longueur des roues hélices creuses (1) et de leurs cages statiques (2).
4° ---- Plusieurs caractéristiqués spécifiqués à cette invention, concernent la nouvelle méthode de configuration des profils et autres données, propres à chaque élément constitutif de forme hélicoïde ou circulaire. Au moins une coupe est utilisée pour définir le profil de chaque élément.
   • A-Une première nouveauté consiste à concevoir chaque bord d'attaque et de fuite (3 et 4), à l'aide de portions de figures géométriques qui ont un centre de référence (5 et 6), et dé les relier ensuite à l'aidé de portions de figures géométriques qui ont également un centre de référence (7 et 8), et ainsi de définir les aires du corps dès éléments constitutifs évolutifs.
   • B--Une deuxième nouveauté consiste à indiquer une valeur de décalage de la position des centres pour obtenir une déformation de creux en profondeur (10), de préférence concave ou convexe, du corps des aires des éléments constitutifs évolutifs.
   • C--Une troisième nouveauté consiste à indiquer l'épaisseur de la toile des éléments constitutifs évolutifs qui est figuré par un cercle dont le centre sert de référence (9).
   • D--Une quatrième nouveauté consiste à indiquer une valeur de décalage annulaire (11) (13) entre les centres des bords d'attaque ou de fuite intérieurs, par rapport aux bords d'attaque ou de fuite extérieurs des éléments constitutifs permettant de préférence de décaler et de coucher, les bords intérieurs par rapport aux bords extérieurs
   • E--Une cinquième nouveauté consiste à indiquer une valeur- de décalage angulaire (12) entre les centres des bords d'attaque ou de fuite respectivement soit intérieurs ou extérieurs, des éléments constitutifs hélicoïdes afin de permettre de préférence de les décaler et de les positionner les uns par rapport aux autres.
   • F----Une sixième nouveauté consiste à déterminer au moins 2 valeurs de pas pour les hélicoïdes, qui sont fournies pour au moins deux positions précisées sur la longueur de la roue ou de la cage, et sont ensuite lissés par le logiciel
5° ---- Il y a alors affichage des profils configurés permettant un contrôle visuel local.
6° ---- pour finir les éléments concernés les coupes sont ensuite positionnées sur au moins deux points précisés sur la longueur de la roue ou de la cage pour qu'ils soient ensuite lissés par le logiciel.
7° ---- L'affichage final résultant du mixage de l'ensemble des hélicoides et cloisons radiales entre elles, permet un dernier contrôle visuel. (Fig .2)
8° ---- En cas d'insatisfaction il est possible de revenir en arrière et de corriger des paramètres pour optimiser le résultat.
9° ---- Un dispositif de contrôle en continu de la compatibilité des valeurs des paramètres introduits est intégré au procédé, afin d'éviter les aberrations.

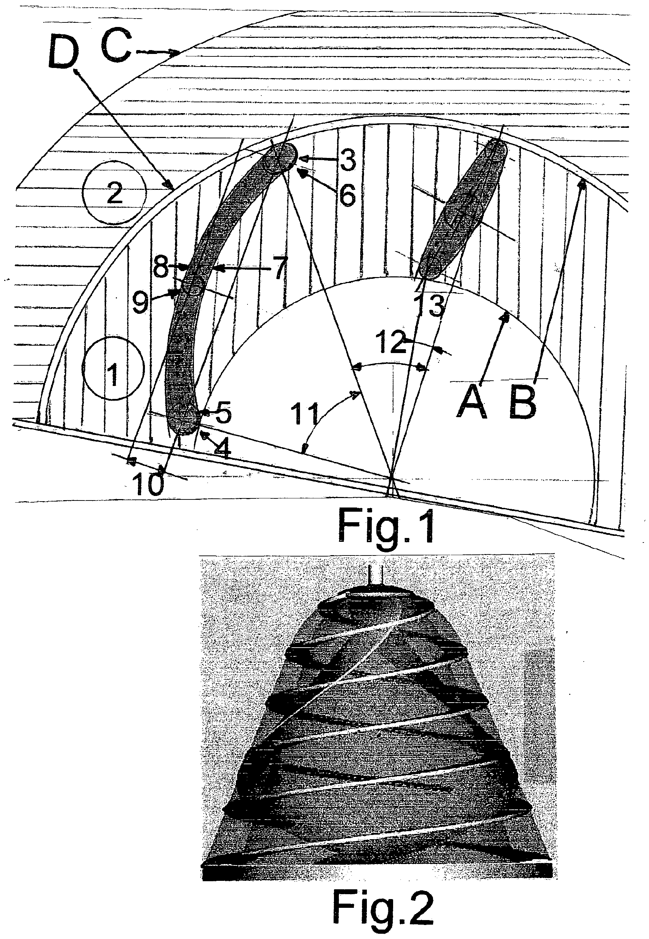

Des dessins sont joints à titre indicatif et non limitatif, et les descriptions sont volontairement schématisées pour faciliter la compréhension de ces formes complexes.
--- Le dessin fig 1 représente une portion de coupe simplifiée, de la surface de révolution balayée par les bords intérieurs et extérieurs (AB) d'une hélice creuse (1), et (D C) de sa cage statique (2).
--- Le dessin représente une portion de coupe de la roue où sont matérialisés à plat des bords d'attaque ou de fuite, extérieurs (3) et intérieurs (4) d'un élément.
--- Il montre l'aire du corps de l'élément qui est circonscrite, par un bords d'attaque ou de fuite, fini par une portion de cercle (5), et par l'autre bords d'attaque ou de fuite, qui est fini par une portion d'ogive (6).
--- Le dessin montre que les bords d'attaque ou de fuite sont raccordés entre eux par deux grandes portions de cercle qui viennent les tangenter (7 et 8) délimitant ainsi complètement l'aire de l'élément.
--- Le dessin montre que la valeur donnée au cercle situé au milieu de l'élément (9) permet de définir son épaisseur.
-- Le dessin montre que la valeur donnée, pour le décalage du centre du cercle précité avec la droite liant les centres des bords d'attaque et de fuite (10), indique la profondeur du creux de l'élément.
--- Le dessin montre le décalage angulaire entre bords d'attaque et bords de fuite (11).
--- Le dessin montre le décalage angulaire donné pour deux hélicoïdes (12), de préférence de pas différents, qui se confondent ensuite quand elles se rencontrent dans leurs parcours

Le dessin fig 2 montre une roue exëcutée selon lé principe de configuration décrit ci dessus.

Le principe exposé selon les dessins fournis, est appliqué de la même façon aux cages, enveloppes et grilles statiques (2), elles ne seront donc pas l'objet de dessins complémentaires.

## Revendications

1. Procédé de configuration des roues hélicoïdes ou circulaires creuses (1) et de leurs cages statiques (2) comportant les étapes suivantes:
- entrée de paramètres de configuration de base offerts en option, tels que:
• les éléments mécaniques conventionnels permettant d'incorporer les roues et cages dans leur milieu applicatif,
• les valeurs dimensionnelles telles que longueur hors tout, diamètres intérieurs et extérieurs,
• la quantité de chaque élément constitutif, et
• la détermination des sens de rotation choisis ;
- entrée de paramètres mathématiques correspondant aux formes géométriques connues qui vont déterminer les surfaces de révolution extérieures et intérieures balayées par les roues, ou celles des cages qui contiennent les roues, et les formes extérieures des cages ;
- contrôle continu de la compatibilité des valeurs des paramètres introduits; et
- détermination des pas évolutifs des éléments constitutifs hélicoïdes qui sont définis soit par les formules mathématiques conventionnelles, soit de préférence par l'indication d'au moins deux valeurs données sur des points précisés placés sur la longueur des roues hélices creuses (1) et de leurs cages statiques (2),
**caractérisé en ce qu'**il comporte une étape de
- configuration des profils et autres données propres aux éléments circulaires et hélicoïdaux, qui consiste à concevoir chaque bord d'attaque et de fuite (3 et 4), à l'aide de portions de figures géométriques qui ont un centre de référence (5 et 6), et de les relier ensuite à l'aide de portions de figures géométriques qui ont également un centre de référence (7 et 8), et ainsi de définir les aires du corps des éléments constitutifs évolutifs.

2. Procédé de configuration des roues hélicoïdes ou circulaires creuses (1) et de leurs cages statiques (2) selon la revendication précédente, **caractérisé en ce qu'**il comporté en plus une étape de configuration des profils qui consiste à indiquer l'épaisseur de la toile des éléments constitutifs évolutifs qui est figuré par un cercle dont le centre sert de référence (9).

3. Procédé de configuration des roues hélicoïdes ou circulaires creuses (1) et de leurs cages statiques (2) selon les revendications précédentes, **caractérisé en ce qu'**il comporte en plus une étape de configuration des profils qui consiste à indiquer une valeur de décalage de la position des centres pour obtenir une déformation de creux en profondeur (10), de préférence concave ou convexe, du corps des aires des éléments constitutifs évolutifs.

4. Procédé de configuration des roues hélicoïdes ou circulaires creuses (1) et de leurs cages statiques (2) selon les revendications précédentes, **caractérisé en ce qu'**il comporte en plus une étape de configuration des profils qui consiste à indiquer une valeur de décalage angulaire (11,13) entre les centres des tords d'attaque ou de fuite intérieurs, par rapport aux bords d'attaque ou de fuite extérieurs des éléments constitutifs permettant de préférence de décaler et de coucher, les bords inférieurs par rapport aux bords extérieurs.

5. Procédé de configuration des roues hélicoïdes et circulaires creuses (1) et de leurs cages statiques (2) selon l'une quelconque des revendications précédentes, **caractérisé en ce qu'**il comporte en plus une étape de configuration des profils qui consiste à indiquer une valeur de décalage angulaire (12) entre les centres des bords d'attaque ou de fuite, respectivement soit intérieurs, ou extérieurs, des éléments constitutifs hélicoïdes afin de permettre de préférence de les décaler et de les positionner les uns par rapport aux autres.

6. Procédé de configuration des roues hélicoïdes et circulaires creuses (1) et de leurs cages statiques (2) selon l'une quelconque des revendications précédentes, **caractérisé en ce qu'**il comporte en plus une étape de configuration des profils qui consiste à déterminer au moins deux valeurs de pas pour les hélicoïdes, qui sont fournies pour au moins deux positions précisées sur la longueur de la roue ou de la cage, et sont ensuite lissés par le logiciel.

## Patentansprüche

1. Verfahren zur Konfiguration der spiralförmigen oder kreisförmigen Räder (1) und ihrer statischen Käfige (2), aufweisend die folgenden Schritte:
- Eingeben optionaler Basiskonfigurationsparameter, wie:
• die konventionellen mechanischen Elemente, die erlauben, die Räder und Käfige in ihrem Anwendungsmilieu zu inkorporieren,
• die Dimensionswerte wie Länge über alles, Innen- und Außendurchmesser,
• die Menge jedes konstitutiven Elements, und
• die Bestimmung der gewählten Rotationsrichtungen,
- Eingeben mathematischer Parameter, die den bekannten geometrischen Formen entsprechen, die die äußeren und inneren, von den Rädern abgetasteten Drehflächen oder die der Käfige, welche die Räder enthalten, und die äußeren Formen der Käfige oder die der Käfige, welche die Räder enthalten, und die äußeren Formen der Käfige bestimmen werden,
- kontinuierliches Kontrollieren der Kompatibilität der Werte der eingegebenen Parameter, und
- Bestimmen der evolutiven Steigungen der spiralförmigen konstitutiven Elemente, die entweder von den konventionellen mathematischen Formeln oder vorzugsweise von der Angabe von mindestens zwei gegebenen Werten auf präzisen Punkten, platziert auf der Länge der hohlen Spiralräder (1) oder ihrer statischen Käfige (2), definiert sind,
**dadurch gekennzeichnet, dass** es einen Schritt aufweist der
- Konfiguration der Profile und anderer Daten der kreisförmigen und spiralförmigen Elemente, die darin besteht, jeden Angriffs- und Fluchtrand (3 und 4) mit Hilfe von Abschnitten geometrischer Figuren zu konzipieren, die eine Referenzmitte (5 und 6) haben, und sie danach mit Hilfe von Abschnitten geometrischer Figuren zu verbinden, die ebenfalls eine Referenzmitte (7 und 8) haben, und somit die Bereiche des Körpers der evolutiven konstitutiven Elemente zu definieren.

2. Verfahren zur Konfiguration der spiralförmigen oder kreisförmigen Räder (1) und ihrer statischen Käfige (2) nach vorangehendem Anspruch, **dadurch gekennzeichnet, dass** es weiterhin einen Konfigurationsschritt der Profile aufweist, der darin besteht, die Dicke der Haut der evolutiven konstitutiven Bestandteile anzugeben, die von einem Kreis dargestellt ist, dessen Mitte als Referenz (9) dient.

3. Verfahren zur Konfiguration der spiralförmigen oder kreisförmigen Räder (1) und ihrer statischen Käfige (2) nach den vorangehenden Ansprüchen, **dadurch gekennzeichnet, dass** es weiterhin einen Konfigurationsschritt der Profile aufweist, der darin besteht, einen Abweichungswert der Position der Mitten anzugeben, um eine Hohlraumverformung in der Tiefe (10), vorzugsweise konkav oder konvex, des Körpers der Bereiche der evolutiven konstitutiven Elemente zu erhalten.

4. Verfahren zur Konfiguration der spiralförmigen oder kreisförmigen Räder (1) und ihrer statischen Käfige (2) nach den vorangehenden Ansprüchen, **dadurch gekennzeichnet, dass** es weiterhin einen Konfigurationsschritt der Profile aufweist, der darin besteht, einen Winkelabweichungswert (11, 13) zwischen den Mitten der inneren Angriffs- oder Fluchtränder in Bezug zu den äußeren Angriffs- oder Fluchtränder der konstitutiven Elemente anzugeben, der erlaubt, die Innenränder in Bezug zu den Außenrändern zu versetzen und zu legen.

5. Verfahren zur Konfiguration der spiralförmigen oder kreisförmigen Räder (1) und ihrer statischen Käfige (2) nach einem der vorangehenden Ansprüche, **dadurch gekennzeichnet, dass** es weiterhin einen Konfigurationsschritt der Profile aufweist, der darin besteht, einen Winkelabweichungswert (12) zwischen den Mitten der entweder inneren oder äußeren Angriffs- oder Fluchtränder der konstitutiven spiralförmigen Elemente anzugeben, um zu erlauben, sie vorzugsweise zu versetzen und sie in Bezug zueinander zu positionieren.

6. Verfahren zur Konfiguration der spiralförmigen oder kreisförmigen Räder (1) und ihrer statischen Käfige (2) nach einem der vorangehenden Ansprüche, **dadurch gekennzeichnet, dass** es weiterhin einen Konfigurationsschritt der Profile aufweist, der darin besteht, mindestens zwei Steigungswerte für die Schraubenflächen zu bestimmen, die für mindestens zwei präzise Positionen auf der Länge des Rads oder des Käfigs bereitgestellt und danach von der Software geglättet werden.

## Claims

1. A method for configuring hollow helical or circular impellers (1) and their static cages (2) including the following steps:
- entering basic configuration parameters offered as an option, such as:
• the conventional mechanical elements making it possible to incorporate the impellers and cages into their application environment,
• the dimensional values, such as overall length, inner and outer diameters,
• the quantity of each component element, and
• the determination of the selected rotation directions;
- entering mathematical parameters corresponding to the known geometric shapes that will determine the outer and inner revolution surfaces swept by the impellers, or those of the cages that contain the impellers, and the outer shapes of the cages;
- continuously checking the compatibility of the values of the introduced parameters; and
- determining evolutive pitches of the helical component elements that are defined either by the conventional mathematical formulas, or preferably by the indication of at least two given values on specified points placed on the length of the hollow helical impellers (1) and their static cages (2),
**characterized in that** it includes a step for
- configuring profiles and other data specific to the circular and helical elements, which consists of designing each leading and trailing edge (3 and 4), using geometric figures that have a center of reference (5 and 6), and next connecting them using portions of geometric figures that also have a center of reference (7 and 8), and thus defining the areas of the bodies of the evolutive component elements.

2. A method for configuring hollow helical or circular impellers (1) and their static cages (2) according to the preceding claim, **characterized in that** it additionally includes a step for configuring the profiles that consists of indicating the thickness of the web of the evolutive component elements that is shown by a circle, the center of which serves as reference (9).

3. The method for configuring hollow helical or circular impellers (1) and their static cages (2) according to the preceding claim, **characterized in that** it additionally includes a step for configuring profiles that consists of indicating an offset value of the position of the centers to obtain a hollow deformation (10) depthwise, preferably concave or convex, of the body of the areas of the evolutive component elements.

4. The method for configuring hollow helical or circular impellers (1) and their static cages (2) according to the preceding claims, **characterized in that** it additionally includes a step for configuration of the profiles that consists of indicating an angular offset value (11, 13) between the centers of the inner leading or trailing edges, relative to the outer leading or trailing edges of the components preferably making it possible to offset and couch the [inner] edges relative to the outer edges.

5. The method for configuring hollow helical or circular impellers (1) and their static cages (2) according to any one of the preceding claims, **characterized in that** it additionally includes a step for configuring profiles that consists of indicating an angular offset value (12) between the centers of the leading or trailing edges, respectively inner or outer, of the helical component elements in order preferably to make it possible offset them and position them relative to one another.

6. The method for configuring hollow helical and circular impellers (1) and their static cages (2) according to any one of the preceding claims, **characterized in that** it additionally includes a step for configuring profiles that consists of determining at least two pitch values for the helicoids, which are provided by at least two specified positions over the length of the impeller or the cage, and are next smoothed by the software.
